# EUROPÄISCHE PATENTSCHRIFT

(11) **EP 2 598 309 B1**
(45) Veröffentlichungstag und Bekanntmachung des Hinweises auf die Patenterteilung: **13.01.2016**
(21) Anmeldenummer: 11746512.0
(22) Anmeldetag: 29.07.2011
(51) Int. Cl.: B29C 53/56

(54) **STABWICKELSTRUKTUR IN COMPOSITEBAUWEISE**
ROD WINDING STRUCTURE IN COMPOSITE DESIGN
STRUCTURE DE BARRES À ENROULEMENTS DE CONSTRUCTION COMPOSITE

(30) Priorität: 30.07.2010 DE 102010038719
(43) Veröffentlichungstag der Anmeldung: 05.06.2013
(73) Patentinhaber: Baltico GmbH, 18239 Hohen Luckow (DE)
(72) Erfinder: BÜCHLER, Dirk, 18273 Güstrow (DE)
(74) Vertreter: Garrels, Sabine
(86) Internationale Anmeldenummer: PCT/EP2011/063080
(87) Internationale Veröffentlichungsnummer: WO 2012/013770

(56) Entgegenhaltungen:
- CN-A- 101 418 627
- DE-A1- 3 229 064

## Beschreibung

Die Erfindung befasst sich mit Stabwickelstrukturen in Compositebauweise, welche beispielsweise für Tragflügel oder Rotorblätter aber auch in anderen Bereichen, bei denen eine Leichtstruktur gefragt ist wie beispielsweise für Schiffsrümpfe, Fahrzeugkarosserien, Stützstrukturen für Solarspiegelpaneele u.a. eingesetzt werden können.

Für die Fertigung von Tragflügeln und Rotoren z.B. im Flugzeugbau oder für Windkraftanlagen aber auch im Bootsbau werden üblicherweise Schalenbauweisen verwendet. Dabei wird um einen meist zentral gelegenen Holm die Außenfläche als Schale aufgespannt. Die Schale kann einen erheblichen Anteil der Kräfte aufnehmen.

Diese Bauweise hat den Nachteil, dass Sie nur mit einem erheblichen manuellen Aufwand umgesetzt werden kann. So müssen alle Einzelbauelemente zugeschnitten, positioniert und letztlich verbunden werden. Damit ist die Reproduzierbarkeit verkompliziert und die Herstellungskosten sind hoch.

Zudem ist eine Optimierung der Schalenstärken nur eingeschränkt möglich, da der technologische Aufwand sonst übermäßig wächst. Das Massegewicht ist daher nicht optimal.

Verbindungen und Anschlüsse insbesondere zu metallischen Konstruktionselementen oder bei Teilungen auch untereinander sind nur eingeschränkt und aufwendig möglich. Auch die Anbindung von zusätzlichen Bauteilen ist kompliziert.

Eine gezielte eingeprägte Funktionalität wie z.B. lastabhängige Torsion der Bauteile ist nur mit vielen Einschränkungen möglich.

Eine Alternative verspricht die Lösung wie in WO 2008/115265 A1 aufgeführt: Eine Reihe voneinander beabstandeter Profilteile, welche die Profilform bilden, werden durch eine Vielzahl von Holmen und Querträgern aus stranggezogenen Glasfaserwerkstoffprofilen fachwerkmäßig zusammengehalten.

Allerdings ist der technologische Aufwand auch hier erheblich, müssen die Einzelteile doch manuell zugeschnitten, positioniert und verbunden werden, und kommt einer industriellen Fertigung nicht wesentlich entgegen.

Eine Alternative bietet die Fertigung mittels Stabwickelstrukturen nach Patent DE 102006038130 B3. Hier werden ein Verfahren zur Herstellung tragender Strukturen und die damit hergestellte tragende Struktur offenbart. Getränkte Kohlefaserstränge werden in einem einzigen kontinuierlichen Wickel- und Legeverfahren um Befestigungsteile, welche in einem Raster angeordnet sind, horizontal, vertikal und diagonal gewickelt. Werden keine Befestigungsteile verwendet, können die getränkten Kohlefaserstränge oberhalb und unterhalb bereits gewickelter bzw. gelegter Kohlefaserstränge verlegt werden. Es entsteht ein Gitternetz, welches sehr stabil und belastbar ist.

Die Anwendung für Tragflügeln und Rotoren, Schiffsrümpfe, Fahrzeugkarosserien und Stützstrukturen für Solarspiegelpaneele ist hierbei nicht vorgesehen.

DE 3229064 A1 offenbart gemäß dem Oberbegriff des Anspruchs 1 ein Verfahren zur Herstellung von tragenden Gittergerüsten. Es werden hierzu eine Vielzahl von Zwischenquerspanten längs einer Längsachse anordnet. Die Querspanten weisen eine Reihe von um den Umfang angeordneten Teilen auf, die eine harzbenetzte Faser aufnehmen und durch einen Wickelvorgäng ein Gittergerüst bilden.

### Darstellung der Erfindung

Aufgabe der Erfindung ist es, ausgehend vom Stand der Technik die Stabwickelstrukturen so weiter zu entwickeln, dass diese auch für die Herstellung von Tragflügeln oder Rotorblättern geeignet sind.

Erfindungsgemäß wird ein komplexes dreidimensionales Gitter aus vorab getränkten Fasersträngen über Knotenpunkte gelegt und bildet dabei den Grundkörper des zu fertigenden Bauteils.

Die Stabwickelstruktur in Compositebauweise mit einem Spantengerüst, welche aus getränkten Fasersträngen in einem kontinuierlichen Wickel- und Legevorgang gebildet werden, ist dadurch gekennzeichnet, dass die Spanten Vollspanten oder aus Fasersträngen vorgefertigten Gitterstruktur-Spanten sind, welche Knotenpunkte enthalten, über die die getränkten Fasersträngen abwechselnd und schrittweise diagonal, horizontal und vertikal bis zur gewünschten Strängstärke abgelegt sind, und dass die Stabwickelstruktur bei Bedarf teilbar ist. Die Vollspanten bestehen aus Faserverbundwerkstoffen oder Aluminium oder anderen leichten Materialien. Die Knotenpunkte sind zu den äußeren Rändern der Spanten gerichtete, sich jeweils gegenüberliegende Öffnungen, welche gleichmäßig über den gesamten Spant verteilt sind und einen Durchmesser aufweisen, welcher sich nach der endgültigen Dicke der einzulegenden Faserstränge richtet, wobei die Öffnungsbreite der Knotenpunkte nach außen kleiner als der zu erwartende endgültige Faserstrangquerschnitt ist.

Die Form der Spanten orientiert sich am äußeren Profil der Stabwickelstruktur und die Stabwickelstruktur wird durch die Spanten in Abschnitte unterteilt, wobei der Abstand der Spanten von der Gesamtstruktur und deren Festigkeitsanforderung abhängig ist.

Eine weitere Ausführungsform bevorzugt als Knotenpunkte an den Spanten angeordnete Befestigungsteile. Die Befestigungsteile sind konkave, zylindrische Teile mit einem gebördelten oder anderweitig verdickten Rand. Sie sind mit einer mittigen Bohrung versehen oder als zylindrische Hohlteile ausgeführt. Beispielsweise können sie aus Aluminium sein. Die Befestigungsteile können nach der Fertigung aus dem Bauteil entfernt werden oder als zusätzliche Tragstruktur in dem Bauteil verbleiben.

In einer weiteren Ausführungsform sind die Spanten als Profilflansch ausgebildet, indem auf ihrer äußeren Seite zwischen jeweils zwei Öffnungen oder Befestigungsteilen eine Nut verläuft, in welche die Faserstränge eingelegt sind. So können zwei Spanten miteinander verbunden werden, wodurch eine Gesamtstruktur gebildet wird, welche bei Bedarf teilbar ist. Die Verbindung erfolgt über eine Verschraubung der Profilflansche miteinander.

Im Fußbereich der Stabwickelstruktur ist ein Metallflansch mit über den Umfang verteilten Schraubstiften quer zu den zu wickelnden Fasersträngen angeordnet.

Die Gesamtstruktur ist umwickelt, beplankt, umgossen oder verschäumt.

Die erfindungsgemäße Stabwickelstruktur kann als Rotorblatt für Windkraftanlagen oder als Trägflügel für Flugzeuge oder Schiffe angewendet werden.

Der Fertigungsvorgang selbst kann automatisiert und von Handhabungsrobotern ausgeführt werden. Nach Abschluss des Fertigungsvorgangs wird das Material ausgehärtet und bildet das Festigkeitsgerüst. Durch das Einwickeln von Buchsen und/oder Stiften vorzugsweise aus Metall kann eine exzellente Verbindung zu anderen Bauteilen/ Anbauten hergestellt werden.

Die entstandenen Tragwerksstruktur kann in einem anschließenden Arbeitsgang beplankt oder in einer Form mit einem Schaumstoff umschäumt werden. Dabei bildet sich dann die gewünschte Geometrie und Oberflächenqualität. Zur Erhöhung der Abriebfestigkeit oder für Dekorzwecke kann noch die Beschichtung mit einer Folie und oder eine Lackierung erfolgen.

### Ausführung der Erfindung

Die Erfindung wird anhand von Zeichnungen näher erläutert. Hierzu zeigen
Figur 1 schematische Darstellung eines Ausführungsbeispiels der Erfindung als Rotorblatt in der Stabwickelstruktur in Cömpositebauweise Figur 2 Vollspanten mit Umwicklung aus Fasersträngen
Figur 3 Vollspant mit Nuten und Öffnungen
Figur 4 Verbindung der Spanten untereinander über eine profilflanschartige Verschraubung
Figur 5 Verbindung zu einem Metallflansch im Fußbereich des Rotorblattes (schematische Darstellung)
Figur 6 Verbindung zu einem Metallflansch im Fußbereich eines Rotorblattes mit Vollspanten
Figur 7 Verbindung zu einem Metallflansch im Fußbereich eines Rotorblattes mit aus Fasersträngen vorgefertigten gewickelten Gitterstruktur-Spanfen
Figur 8 Rotorblatt (Ausschnitt) mit schalenförmiger Umschäumung zur Außenkontur und Versiegelung
Figur 9 Schiffsrumpf in Tragwerksstruktur
Figur 10 Deckshaus in Tragwerksstruktur
Figur 11 Stützstruktur für ein Solarspiegelpaneel.

Die erfindungsgemäße Lösung kann überall dort angewendet werden, wo Leichtbaustrukturteile benötigt werden. Erläutert wird die Erfindung an einem Rotorblatt für Windkraftfanlagen als ein Ausführungsbeispiel. Es ist aber ebenso vorstellbar, dass beispielsweise Tragflügel für Flugzeuge nach dem gleichen Prinzip hergestellt werden.

Erfindungsgemäß wird ein komplexes dreidimensionales Gitter aus vorab getränkten Fasersträngen, z.B. Kohlefasern oder Glasfasern, über Knotenpunkte gelegt und bildet dabei den Grundkörper des zu fertigenden Bauteils. Als Knotenpunkte werden die Punkte auf den Spanten bezeichnet, in denen mehrere Faserbündel zusammenlaufen. Die Knotenpunkte können beispielsweise durch nach außen offene Öffnungen direkt in den Spanten gebildet werden.

Andere Knotenpunkte können aus Befestigungsteilen gebildet werden, welche als konkave, zylindrische Teile mit einem gebördelten oder anderweitig verdickten Rand ausgeführt sind. Die zylindrischen Teile können mit einer mittigen Bohrung versehen oder als zylindrische Hohlteile ausgeführt sein. Als Material wird Aluminium bevorzugt, es ist aber auch anderes leichtes und dabei belastbares Material vorstellbar.

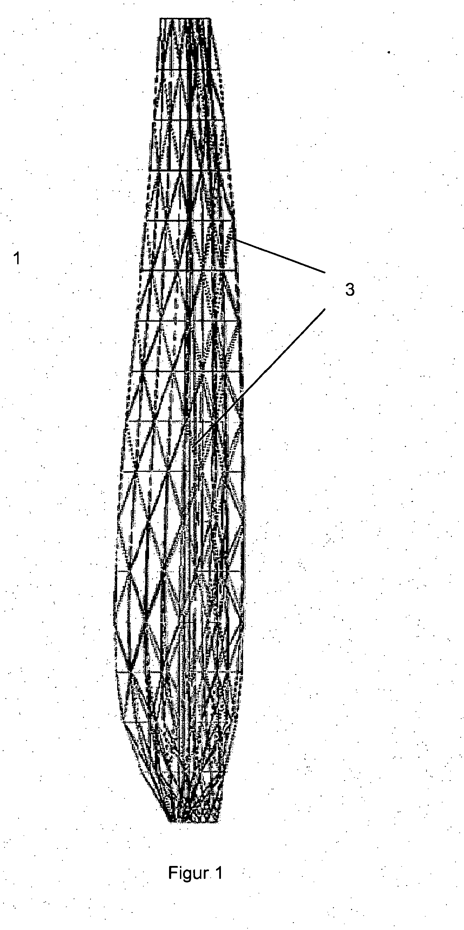

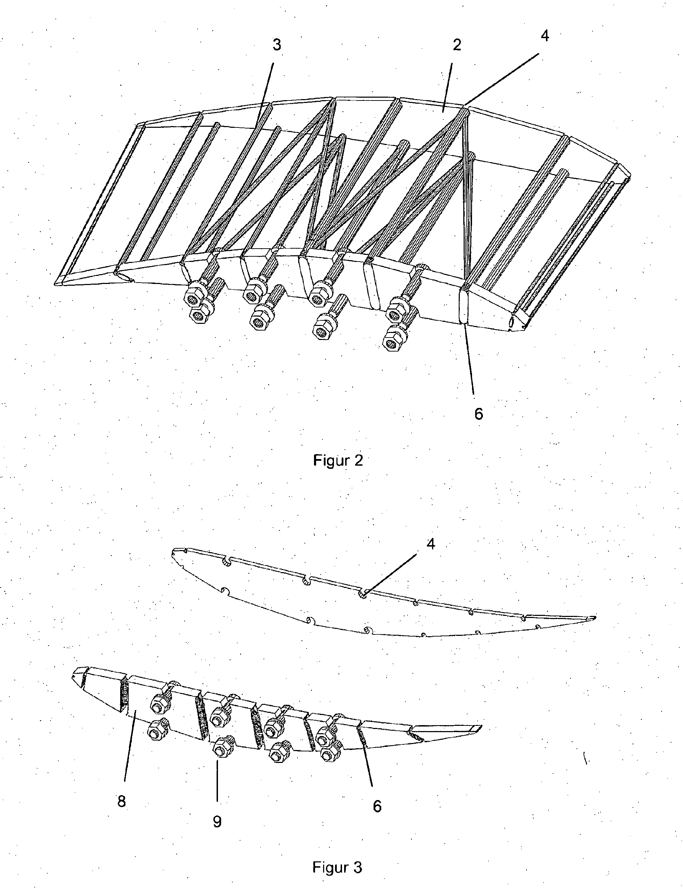

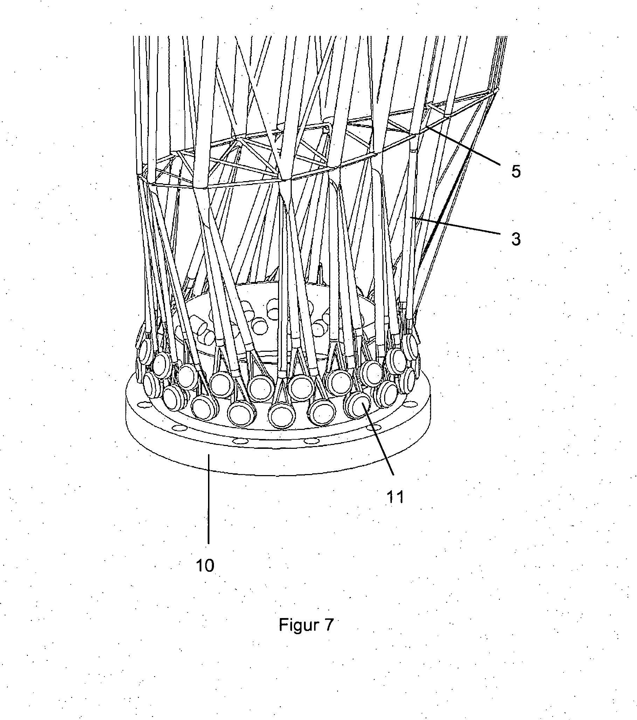

Die Form des Rotorblattes 1 in Figur 1 wird aus einem Spantengerüst aus Vollspanten 2 (Figur 2) oder aus getränkten Fasersträngen ebenfalls vorgefertigten gewickelten Gitterstruktur-Spanten 5 (siehe Figur 7) gebildet. Das Material der Vollspanten 2 ist variabel Vorstellbar sind sowohl Faserverbundwerkstoffe als auch Aluminium oder andere leichte Materialien. Die Form der Spanten orientiert sich am äußeren Profil des Rotorblatts 1. Die Spanten unterteilen das Rotorblatt 1 in Abschnitte.

Die Spanten weisen zu den äußeren Rändern gerichtete, sich jeweils gegenüberliegende Öffnungen 4-(Knotenpunkte) auf, welche hier gleichmäßig über den gesamten Spant verteilt sind. Die Abstände zwischen den Knotenpunkten können auch variieren. Die Öffnung 4 hat einen vorab berechneten Durchmesser, welcher sich nach der endgültigen Dicke der einzulegenden Faserstränge 3 richtet. Die Öffnungsbreite der Knotenpunkte 4 ist nach außen kleiner als der zu erwartende endgültige Faserstrangquerschnitt.

Alternativ sind als Knotenpunkte auf den Spanten Befestigungsteile angeordnet, die nach der Fertigung aus dem Bauteil entfernt werden oder auch als zusätzliche Tragstruktur in dem Bauteil verbleiben können.

Zwischen den Spanten, welche voneinander in einem definierten Abstand, der aus der Gesamtlänge des Rotorblattes und der geforderten Festigkeit berechnet wird (im Beispiel zwischen 10 cm und 500 cm), angeordnet sind, werden getränkte Faserstränge 3 in einem kontinuierlichen Wickel- und Legevorgang in die Öffnungen 4 oder über die Befestigungsteile abwechselnd und schrittweise diagonal, horizontal und vertikal abgelegt. Dabei erfolgt die Ablage solange verteilt über die einzelnen Knotenpunkte, bis die gewünschte Strangstärke erreicht ist. Die zeitliche Reihenfolge der Ablage der Faserstränge 3 wird dabei so berechnet, dass ein weitgehend kontinuierlicher Prozess über alle Knotenpunkte erfolgt. Der Abstand zwischen den einzelnen Spanten kann konstruktionsbedingt unterschiedlich sein.

Wenn das Rotorblatt 1 geteilt werden soll, um beispielsweise Transportprobleme zu vermeiden, kann gezielt an den zu verbindenden Enden jeweils ein Profilflansch 8 als Spant eingesetzt werden. Dieser wird in Figur 3 gezeigt. Auf der äußeren Seite des Profilflansches 8 verläuft zwischen jeweils zwei Öffnungen 4 bzw. Befestigungsteilen eine Nut 6. Durch die Nut 6 liegen die Faserstränge 3 nicht auf der Oberfläche sondern schließen mit der Oberfläche des Profilflansches 8 ab, so dass eine Verbindung von zwei Spanten ohne Zwischenraum erfolgen kann.

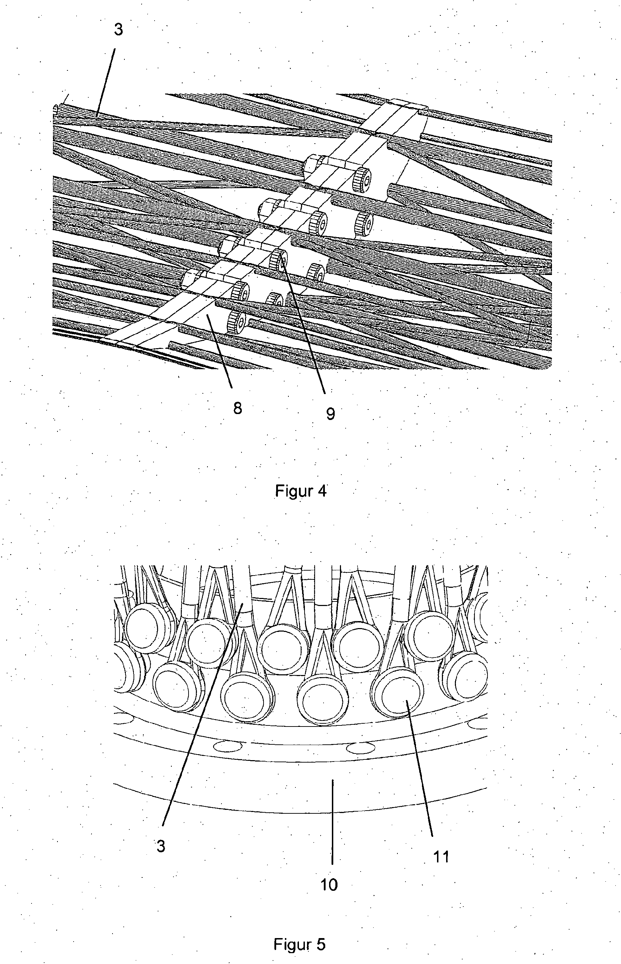

Die Verbindung der Einzelabschnitte des Rotorblattes 1 untereinander erfolgt über eine Verschraubung 9 der Profilflansche 8 (Figur 4). Die einzelnen Faserlängsstränge 3 werden dabei um den Profilflansch 8 zurückgeführt und umschließen diesen. Auf der Berührungsfläche zum Gegenflansch sind die Faserstränge 3 in den Flansch versenkt und ermöglichen so das plane Aufliegen der beiden Flanschhälften. Durch diese Ausführung ist es auch denkbar, die Konstruktion so auszugestalten, dass die Spanten auswechselbar sind.

In Figur 5 wird schematisch eine Verbindung zu einem Metallflansch 10 im Fußbereich des Rotorblattes 1 gezeigt. Der Metallflansch 10 stellt eine Sonderform eines Spants dar. Die Form des Metallflanschs 10 ist entsprechend der Anwendung gestaltet. Bei einem Rotorblatt 1 für Windkraftanlagen ist sie in der Regel kreisförmig. Andere Querschnitte sind aber genauso herstellbar. Der Metallflansch 10 besitzt über den Umfang verteilt Schraubstifte 11 quer zu den zu wickelnden Fasersträngen 3. Um diese Schraubstifte 11 werden die Faserstränge 3 gelegt. Dadurch wird eine sehr gleichmäßige und hochbelastbare Verbindung erzielt.

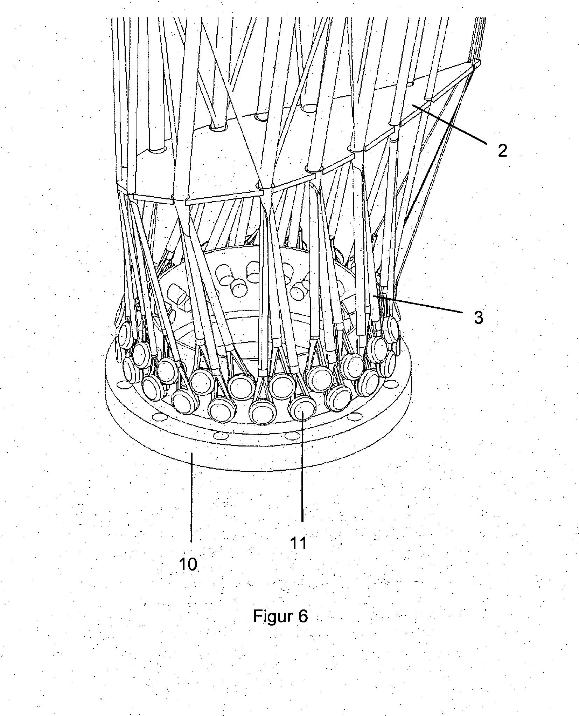

Figur 6 zeigt die Verbindung zu einem Metallflansch 10 im Fußbereich eines Rotorblattes 1 mit Vollspanten 2 als eine Ausführungsform und Figur 7 zeigt die Verbindung zu einem Metallflansch 10 im Fußbereich des Rotorblattes 1 mit aus Kohlefasersträngen vorgefertigten gewickelten Gitterstruktur-Spanten 5 als eine zweite Ausführungsform.

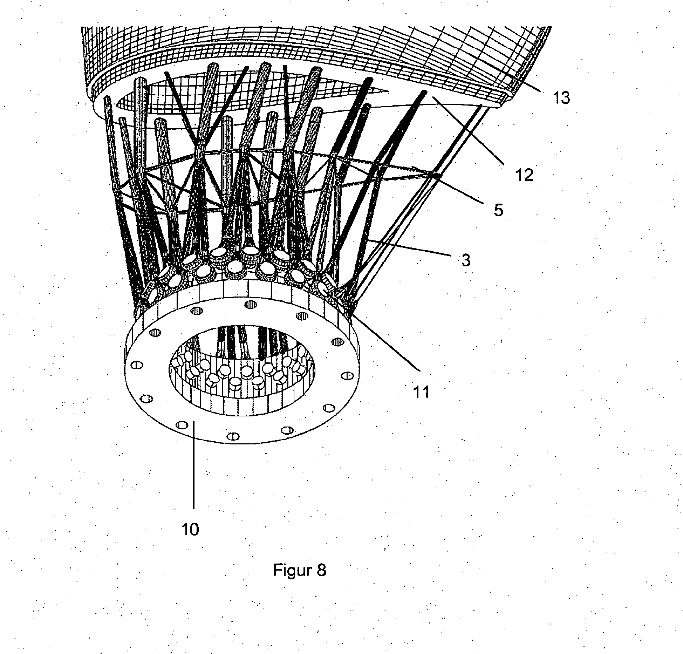

Abschließend wird, wie in Figur 8 gezeigt, die gesamte Gitterstruktur oder Teile der Struktur mit einem Schaum oder Kunststoff umschäumt, vergossen oder ausgeschäumt. Es ist auch möglich, mehrere Techniken zu kombinieren. Die Umschäumung 12 kann dabei die Konstruktion voll ausfüllen oder schalenförmig zur Außenkontur ausgeführt werden. Auf der äußeren Oberfläche kann eine Versiegelung 13 durch eine wetter- und erosionsfeste Folie erfolgen. Alternativ kann aber auch ein Compositelaminat oder eine metallische Oberflächenbeplattung verwendet werden.

Soll die Konstruktion beispielsweise als Tragflügel für Flugzeuge oder auch Schiffe (z.B. Bodeneffektfahrzeuge, Tragflügelboote) verwendet werden, ändern sich lediglich die Form der Spanten und deren Abstände zueinander. Die Grundkonstruktion ist demnach ähnlich und bedarf daher keiner ausführlichen Erläuterung.

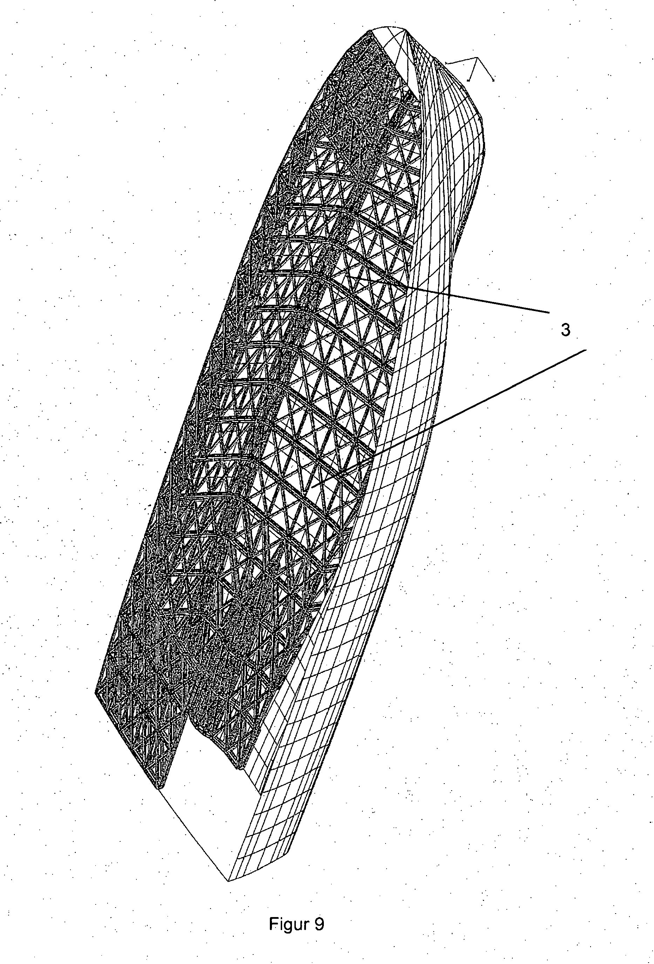

In den Figuren 9 bis 11 werden weitere Beispiele für mögliche Anwendungen gezeigt. Mit der Erfindung ist es möglich, auch so komplizierte Tragwerksstrukturen wie für einen Schiffsrumpf (Figur 9) oder auch eine Fahrzeugkarosserie, Waggons und Triebwerkswagen, Flugzeugrümpfe herzustellen. Für einen Schiffsrumpf nach Figur 9 werden die Faserstränge 3 in hier nicht weiter gezeigte, aber wie in Figur 2 folgende erläuterte Öffnungen auf Spanten, die über die Rumpflänge verteilt sind abgelegt. Die Außenhaut wird als Laminat mit der Gitterstruktur verklebt. Die Spanten selbst können in der Struktur verbleiben oder als wiederverwendbares Werkzeug ausgeführt werden.

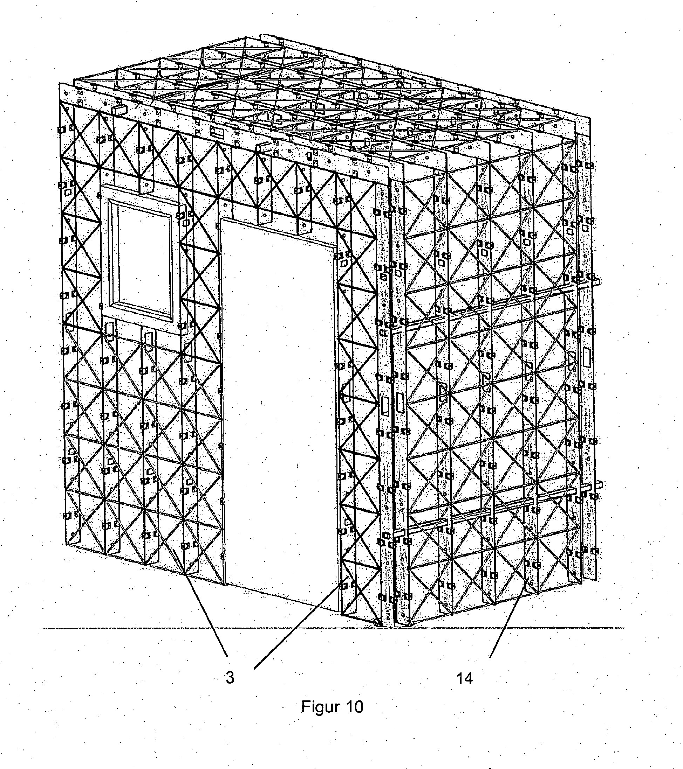

Figur 10 zeigt ein Deckshaus, welche in identischer Art und Weise gefertigt werden kann. Vorteilhafter Weise sollten hier einzelne Wandelemente Längsseite/ Querseite, Decke separat gefertigt werden und die Spanten 14 im Bauteil verbleiben. Die Spanten 14 können auch als Wickelstruktur ausgeführt werden.

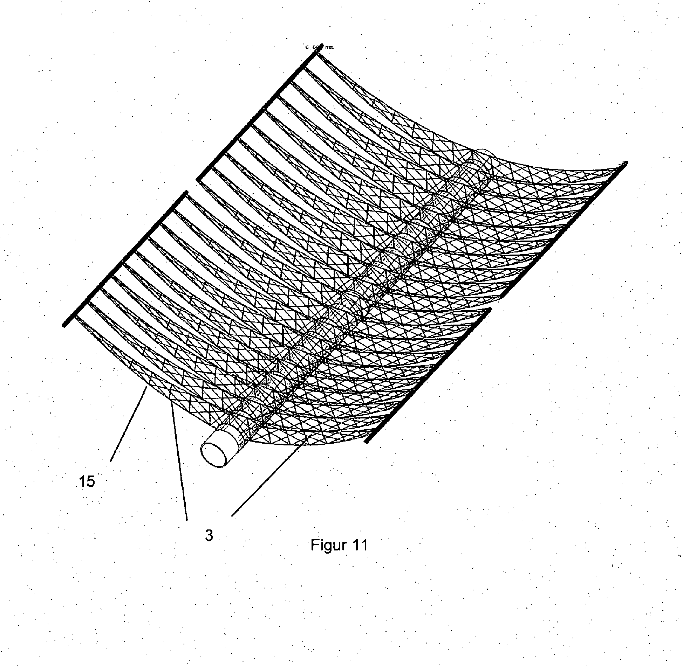

Das Deckshaus in Figur 10 wie auch die Stützstruktur für ein Solarspiegelpaneel (Figur 11) sind weitere Beispiele der möglichen Umsetzung. Für das Solarspiegelpaneel (Figur 11) besteht die Struktur aus einzelnen vorab eben gewickelten Gitterkomponenten (Spanten 15). Diese werden auf Profile (hier Rohre) zentral und außen aufgeschoben und verklebt. Als Profile kommen metallische Rohre oder pultrudierte Kunststoffrohre zum Einsatz

Diese Aufzählung soll nicht abschließend sein, mögliche andere Anwendungen sind in allen Bereichen der Technik zu finden.

### Bezugszeichen

- 1: Rotorblatt
- 2: Vollspanten
- 3: Faserstränge
- 4: Öffnungen
- 5: gewickelte Gitterstruktur-Spanten
- 6: Nut
- 8: Profilflansch
- 9: Verschraubung
- 10: Metallflansch
- 11: Schraubstifte
- 12: Umschäumung
- 13: Versiegelung
- 14: Spanten Deckshaus
- 15: Spanten Solarspiegelpaneel

## Patentansprüche

1. Stabwickelstruktur in Compositebauweise, welche aus getränkten Fasersträngen (3) abwechselnd und schrittweise diagonal, horizontal und vertikal bis zur gewünschten Strangstärke in einem kontinuierlichen Wickel- und Legevorgang gebildet wird, mit einem Spantengerüst, welches Knotenpunkte enthält **dadurch gekennzeichnet, dass**
die Spanten aus Fasersträngen (3) vorgefertigten Gitterstruktur-Spanten (5) sind, deren Knotenpunkte zu den äußeren Rändern der Spanten gerichtete, sich jeweils gegenüberliegende Öffnungen (4) sind, welche gleichmäßig über den gesamten Spant verteilt sind und einen Durchmesser aufweisen, welcher sich nach dem Querschnitt der einzulegenden Faserstränge (3) richtet, wobei die Öffnungsbreite zur Außenkante der Spanten hin kleiner als der zu erwartende endgültige Querschnitt der einzulegenden Faserstränge (3) ist.

2. Stabwickelstruktur nach Anspruch 1 **dadurch gekennzeichnet, dass** die Form der Spanten sich am äußeren Profil der Stabwickelstruktur orientiert und die Stabwickelstruktur durch die Spanten in Abschnitte unterteilt wird, wobei der Abstand der Spanten von der Gesamtstruktur und deren Festigkeitsanforderung abhängig ist.

3. Stabwickelstruktur nach Anspruch 1 oder 2 **dadurch gekennzeichnet, dass** die Vollspanten aus Faserverbundwerkstoffen oder Aluminium oder anderen leichten Materialien bestehen.

4. Stabwickelstruktur nach Anspruch 1 **dadurch gekennzeichnet, dass** als Knotenpunkte Befestigungsteile an den Spanten angeordnet sind.

5. Stabwickelstruktur nach Anspruch 4 **dadurch gekennzeichnet, dass** die Befestigungsteile konkave, zylindrische Teile mit einem gebördelten oder anderweitig verdickten Rand sind.

6. Stabwickelstruktur nach Anspruch 4 oder 5 **dadurch gekennzeichnet, dass** die Befestigungsteile mit einer mittigen Bohrung versehen oder als zylindrische Hohlteile ausgeführt sind.

7. Stabwickelstruktur nach einem der Ansprüche 4 bis 6 **dadurch gekennzeichnet, dass**
die Befestigungsteile nach der Fertigung aus dem Bauteil entfernt werden oder als zusätzliche Tragstruktur in dem Bauteil verbleiben.

8. Stabwickelstruktur nach einem der Ansprüche 1 bis 7 **dadurch gekennzeichnet, dass**
die Spanten als Profilflansch (8) ausgebildet sind, indem auf ihrer äußeren Seite zwischen jeweils zwei Öffnungen (4) oder Befestigungsteilen (7) eine Nut (6) verläuft, in welche die Faserstränge (3) eingelegt sind.

9. Stabwickelstruktur nach Anspruch 8 **dadurch gekennzeichnet, dass** zwei Spanten miteinander verbunden sind, wodurch eine Gesamtstruktur gebildet wird, welche bei Bedarf teilbar ist.

10. Stabwickelstruktur nach Anspruch 9 **dadurch gekennzeichnet, dass** die beiden Spanten über eine Verschraubung (9) der Profilflansche (8) miteinander verbunden sind.

11. Stabwickelstruktur nach Anspruch 1 **dadurch gekennzeichnet, dass** im Fußbereich der Stabwickelstruktur ein Metallflansch (10) mit über den Umfang verteilten Schraubstiften (11) quer zu den zu wickelnden Fasersträngen (3) angeordnet ist.

12. Stabwickelstruktur nach Anspruch 11 **dadurch gekennzeichnet, dass** die Form des Metallflanschs (10) kreisförmig ist.

13. Stabwickelstrukfur nach einem der Ansprüche 1 bis 12 **dadurch gekennzeichnet, dass**
die Gesamtstruktur umwickelt, beplankt, umgossen oder verschäumt ist.

14. Stabwickelstruktur nach einem der Ansprüche 1 bis 13 **dadurch gekennzeichnet, dass**
diese als Rotorblatt für Windkraftanlagen oder als Tragflügel für Flugzeuge oder Schiffe angewendet wird.

15. Stabwickelstruktur nach einem der Ansprüche 1 bis 13 **dadurch gekennzeichnet, dass**
diese als Schiffsrumpf, Deckshaus, Fahrzeugkarosserie, Triebwerkswagen, oder Flugzeugrumpf angewendet wird.

16. Stabwickelstruktur nach einem der Ansprüche 1 bis 13 **dadurch gekennzeichnet, dass**
diese als Stützstruktur für ein Solarspiegelpaneel angewendet wird.

## Claims

1. Rod winding structure in a composite construction, which from impregnated fibrous strands (3) is formed alternatingly and incrementally in a diagonal, horizontal, and vertical manner in a continuous winding and laying operation until the desired strand thickness has been attained, the rod winding structure having a rib framework which contains nodal points, **characterized in that** the ribs are of lattice-structure ribs (5) which are prefabricated from fibrous strands (3), the nodal points of which are mutually opposite openings (4) which are oriented towards the outer peripheries of the ribs and which are uniformly distributed across the entire rib and have a diameter which depends on the cross section of the fibrous strands (3) to be inserted, wherein the opening width towards the outer edge of the ribs is smaller than the final cross section that is to be expected of the fibrous strands (3) to be inserted.

2. Rod winding structure according to Claim 1, **characterized in that** the shape of the ribs is adapted to the outer profile of the rod winding structure and that the rod winding structure by the ribs is subdivided into portions, wherein the spacing of the ribs depends on the entire structure and the strength requirements thereof.

3. Rod winding structure according to Claim 1 or 2, **characterized in that** the solid ribs are composed of fibre-composite materials or aluminium or other lightweight materials.

4. Rod winding structure according to Claim 1, **characterized in that** fastening parts are disposed as nodal points on the ribs.

5. Rod winding structure according to Claim 4, **characterized in that** the fastening parts are concave and cylindrical parts having a flanged or an otherwise thickened periphery.

6. Rod winding structure according to Claim 4 or 5, **characterized in that** the fastening parts are provided with a centric bore or are embodied as cylindrical hollow parts.

7. Rod winding structure according to one of Claims 4 to 6, **characterized in that** the fastening parts after production are removed from the component or remain as an additional support structure in the component.

8. Rod winding structure according to one of Claims 1 to 7, **characterized in that** the ribs are configured as profiled flanges (8), **in that** a groove (6) into which the fibrous strands (3) are inserted runs on the outer side of said ribs between in each case two openings (4) or fastening parts (7).

9. Rod winding structure according to Claim 8, **characterized in that** two ribs are interconnected, on account of which an entire structure which if and when required is dividable is formed.

10. Rod winding structure according to Claim 9, **characterized in that** the two ribs are interconnected by a screw connection (9) of the profiled flanges (8).

11. Rod winding structure according to Claim 1, **characterized in that** in the base region of the rod winding structure a metal flange (10) having threaded pins (11) distributed around the periphery is disposed so as to be transverse to the fibrous strands (3) to be wound.

12. Rod winding structure according to Claim 11, **characterized in that** the shape of the metal flange (10) is circular.

13. Rod winding structure according to one of Claims 1 to 12, **characterized in that** the entire structure is wrapped, panelled, moulded, or foamed.

14. Rod winding structure according to one of Claims 1 to 13, **characterized in that** said rod winding structure is used as a rotor blade for wind power plants or as an aerofoil wing for aircraft or ships.

15. Rod winding structure according to one of Claims 1 to 13, **characterized in that** said rod winding structure is used as a ship's hull, a deckhouse, a vehicle body, a power car, or as an aircraft fuselage.

16. Rod winding structure according to one of Claims 1 to 13, **characterized in that** said rod winding structure is used as a support structure for a solar mirror panel.

## Revendications

1. Structure de barres à enroulements de construction composite, qui est formée de torons de fibres imprégnés (3) de manière alternée et progressive, en diagonale, horizontalement et verticalement jusqu'à l'épaisseur de torons souhaitée, en une opération d'enroulement et de pose continue, comprenant un squelette de membrures qui contient des points nodaux, **caractérisée en ce que** les membrures sont des membrures de structure en treillis (5) préfabriquées à partir de torons de fibres (3), dont les points nodaux sont des ouvertures (4) opposées les unes aux autres, orientées vers les bords extérieurs des membrures, qui sont réparties uniformément sur toute la membrure et qui présentent un diamètre basé sur la section transversale des torons de fibres (3) à insérer, la largeur d'ouverture vers l'arête extérieure des membrures étant inférieure à la section transversale finale voulue des torons de fibres (3) à insérer.

2. Structure de barres à enroulements selon la revendication 1, **caractérisée en ce que** la forme des membrures est adaptée au profil extérieur de la structure de barres à enroulements et la structure de barres à enroulements est divisée en sections par les membrures, la distance entre les membrures dépendant de la structure d'ensemble et de ses exigences en matière de solidité.

3. Structure de barres à enroulements selon la revendication 1 ou 2, **caractérisée en ce que** les membrures pleines se composent de matériaux composites renforcés par des fibres ou d'aluminium ou d'autres matériaux légers.

4. Structure de barres à enroulements selon la revendication 1, **caractérisée en ce que** des pièces de fixation sont disposées sur les membrures en tant que points nodaux.

5. Structure de barres à enroulements selon la revendication 4, **caractérisée en ce que** les pièces de fixation sont des pièces concaves, cylindriques, avec un bord rabattu ou épaissi d'une autre manière.

6. Structure de barres à enroulements selon la revendication 4 ou 5, **caractérisée en ce que** les pièces de fixation sont pourvues d'un orifice central ou sont réalisées sous forme de pièces creuses cylindriques.

7. Structure de barres à enroulements selon l'une quelconque des revendications 4 à 6, **caractérisée en ce que** les pièces de fixation sont enlevées du composant après la fabrication ou restent dans le composant en tant que structure porteuse supplémentaire.

8. Structure de barres à enroulements selon l'une quelconque des revendications 1 à 7, **caractérisée en ce que** les membrures sont réalisées sous forme de bride profilée (8), par le fait qu'une rainure (6) s'étend sur leur côté extérieur entre deux ouvertures respectives (4) ou pièces de fixation (7) respectives, dans laquelle rainure sont insérés les torons de fibres (3).

9. Structure de barres à enroulements selon la revendication 8, **caractérisée en ce que** deux membrures sont connectées l'une à l'autre, de sorte qu'il se forme une structure d'ensemble qui peut au besoin être divisée.

10. Structure de barres à enroulements selon la revendication 9, **caractérisée en ce que** les deux membrures sont connectées l'une à l'autre par le biais d'un vissage (9) des brides profilées (8).

11. Structure de barres à enroulements selon la revendication 1, **caractérisée en ce qu'**une bride métallique (10) est disposée dans la région de base de la structure de barres à enroulements, avec des broches filetées (11) réparties sur la périphérie transversalement aux torons de fibres (3) à enrouler.

12. Structure de barres à enroulements selon la revendication 11, **caractérisée en ce que** la forme de la bride métallique (10) est circulaire.

13. Structure de barres à enroulements selon l'une quelconque des revendications 1 à 12, **caractérisée en ce que** la structure d'ensemble est enveloppée, revêtue, enrobée ou moussée.

14. Structure de barres à enroulements selon l'une quelconque des revendications 1 à 13, **caractérisée en ce que** celle-ci est utilisée en tant que pale de rotor pour éoliennes ou en tant qu'aile portante pour avions ou vaisseaux.

15. Structure de barres à enroulements selon l'une quelconque des revendications 1 à 13, **caractérisée en ce que** celle-ci est utilisée en tant que coque de navire, structure pontée, carrosserie de véhicule, voiture motrice ou fuselage d'avion.

16. Structure de barres à enroulements selon l'une quelconque des revendications 1 à 13, **caractérisée en ce que** celle-ci est utilisée pour un panneau-miroir solaire.
